# EUROPÄISCHE PATENTSCHRIFT

(11) **EP 1 768 316 B1**
(45) Veröffentlichungstag und Bekanntmachung des Hinweises auf die Patenterteilung: **18.05.2016**
(21) Anmeldenummer: 06019760.5
(22) Anmeldetag: 21.09.2006
(51) Int. Cl.: H04W 4/02, H04L 12/28, H04L 29/06

(54) **ENTSPERREN EINER MOBILFUNKKARTE**
DEBLOCKING OF A WIRELESS CARD
DÉBLOCAGE D'UNE CARTE MOBILE

(30) Priorität: 26.09.2005 DE 102005045885
(43) Veröffentlichungstag der Anmeldung: 28.03.2007
(73) Patentinhaber: Giesecke & Devrient GmbH, 81677 München (DE)
(72) Erfinder: Altschäfl, Hermann, 81927 München (DE); Rankl, Wolfgang, 81825 München (DE); Renner, Sandra, Dr., 85716 Unterschleissheim (DE)

(56) Entgegenhaltungen:
- EP-A1- 1 450 317
- EP-A2- 0 776 141
- WO-A2-01/91479
- DE-A1- 10 128 948

## Beschreibung

Die Erfindung betrifft Verfahren zum Entsperren einer gesperrten Mobilfunkkarte und zum Einrichten einer derartigen Entsperrfunktionalität sowie eine derartige Mobilfunkkarte.

Mobilfunkkarten, die in ein entsprechendes mobiles Telekommunikatiorisendgerät eingesetzt sind, stellen dem Benutzer einen mobilen Telefonzugang zu einem Mobilfunknetz bereit. Solche Mobilfunkkarten sind in der Regel durch eine benutzerspezifische Zugangskennung geschützt, die zum Einbuchen der Mobilfunkkarte in das Mobilfunknetz von dem Benutzer in das Telekommunikationsendgerät eingegeben wird. Zur Überprüfung der Zugangsberechtigung wird die eingegebene Zugangskennung mit einer auf der Mobilfunkkarte abgespeicherten Referenzzugangskennung verglichen.

Aufgrund des zunehmenden Einsatzes derartiger Zugangskennungen bei den verschiedensten zugangsbeschränkten Systemen, wie z.B. Bankkarten oder sonstige Chipkarten mit benutzerspezifischer Information, besteht für den Benutzer die Schwierigkeit, dass die Zugangskennung seiner Mobilfunkkarte, die sog. PIN ("Personal Identification Number"), verlegt oder vergessen werden kann.

Bei in der Regel dreimaliger Falscheingabe der Zugangskennung wird die Mobilfunkkarte automatisch für weitere Versuche, die Mobilfunkkarte durch Eingabe der Zugangskennung zu entsperren, endgültig gesperrt. Zum Entsperren einer derart gesperrten Mobilfunkkarte ist es allgemein üblich, eine zweite Zugangskennung in Form eines Entsperrschlüssels zur Verfügung zu stellen, mit welchem der Benutzer seine gesperrte Mobilfunkkarte wieder entsperren kann. Im Mobilfunkbereich wird dieser Entsperrschlüssel meist als PUK, "PIN Unblocking Key", bezeichnet.

Der Entsperrschlüssel kann dem Benutzer einer Mobilfunkkarte von dem Kartenherausgeber prinzipiell zu zwei verschiedenen Zeitpunkten mitgeteilt werden: Einerseits präventiv vor einem Entsperrfall, beispielsweise postalisch bei Aushändigung der Mobilfunkkarte zusammen mit der Zugangskennung, und andererseits bei einem Entsperrfall, in der Regel telefonisch. Im erstgenannten Fall besteht die Schwierigkeit, dass ein Benutzer, dessen Mobilfunkkarte gesperrt ist, an seinem aktuellen Standort möglicherweise keinen Zugriff auf den Entsperrschlüssel hat, da er diesen beispielsweise in seiner Wohnung aufbewahrt oder dorthin geschickt bekommt. Im letztgenannten Fall besteht die Schwierigkeit der Kontaktaufnahme mit dem Kartenherausgeber, da die Mobilfunkkarte gesperrt und das Mobiltelefon somit unbrauchbar ist.

In EP 1450317 A1 erlaubt oder unterbindet ein Server der Zahlungsplattform die Nutzung eines an die Karte des Mobilfunkgerätes gebundenen Kontos in Abhängigkeit vom ermittelten Standort des Mobilfunkgerätes.

Der Erfindung liegt daher die Aufgabe zugrunde, eine einfache Möglichkeit zum Entsperren einer gesperrten Mobilfunkkarte bereitzustellen.

Diese Aufgabe wird erfindungsgemäß durch Verfahren und eine Mobilfunkkarte mit den Merkmalen der unabhängigen Ansprüche gelöst. In davon abhängigen Ansprüchen sind vorteilhafte Ausgestaltungen und Weiterbildungen der Erfindung angegeben.

Grundgedanke der Erfindung ist es, einen ausgewählten Entsperrstandort zwischen Benutzer und Mobilfunkkarte als Geheimnis zu vereinbaren. Falls die Mobilfunkkarte durch die Zugangskennung des Benutzers gesperrt ist, kann sie an dem Entsperrstandort wieder entsperrt werden, ohne dass eine weitere Authentisierung oder Identifizierung des Benutzers nötig wäre. Zum Entsperren einer gesperrten Mobilfunkkarte ist es für den Benutzer also lediglich notwendig, die Mobilfunkkarte an den vereinbarten Entsperrstandort zu bringen. Die Lokalisierung der Mobilfunkkarte und ihre anschließende Entsperrung werden dann über ein geeignetes Telekommunikationsendgerät, in welches die Mobilfunkkarte eingesetzt ist, in Interaktion mit einem Mobilfunknetzwerk automatisch durchgeführt. An allen übrigen möglichen Standorten außer dem Entsperrstandort ist ein automatisches Entsperren der Mobilfunkkarte nicht möglich.

Dies hat den Vorteil, dass ein Benutzer zur Entsperrung seiner Mobilfunkkarte lediglich die Mobilfunkkarte und ein zugehöriges Telekommunikationsendgerät benötigt, nicht aber einen speziellen Entsperrschlüssel oder dergleichen. Abgesehen von dem Einfinden des Benutzers mit der Mobilfunkkarte an dem Entsperrstandort sind weitere aktive Handlungen des Benutzers, insbesondere eine persönliche Kontaktaufnahme mit einem Kartenherausgeber oder Mobilfunknetzbetreiber, nicht notwendig. Das Entsperren wird dadurch für den Benutzer wesentlich vereinfacht, da sich der Entsperrstandort leichter merken lässt, als die abstrakte Zahlen- und/oder Buchstabenkombination eines Entsperrschlüssels. Da der Entsperrstandort nur dem Benutzer bekannt ist, ist eine Entsperrung durch unberechtigte Personen unwahrscheinlich. Abhängig von der Netzdichte des betreffenden Mobilfunknetzes kann ein zufälliges Entsperren durch einen Unberechtigten weitestgehend ausgeschlossen werden.

Ein erfindungsgemäßes Verfahren zum Entsperren einer gesperrten Mobilfunkkarte umfasst daher die Schritte des Ermittelns des aktuellen Standorts des Telekommunikationsendgerätes, in welches die gesperrte Mobilfunkkarte eingesetzt ist, und des Vergleichens des ermittelten aktuellen Standorts mit dem vereinbarten Entsperrstandort der Mobilfunkkarte. Falls der aktuelle Standort und der Entsperrstandort übereinstimmen, wird die Mobilfunkkarte entsperrt, indem dem Benutzer entweder seine bisherige Zugangskennung oder eine neu erzeugte Zugangskennung mitgeteilt wird, mit welcher er sich in das Mobilfunknetzwerk einbuchen kann.

Dementsprechend umfasst eine erfindungsgemäße Mobilfunkkarte neben einer Steuereinrichtung, die die Arbeitsweise der Mobilfunkkarte steuert, und einem Speicher, in welchem zumindest eine Zugangskennung des Benutzers hinterlegt ist, eine Standortermittlungseinrichtung und eine Entsperreinrichtung. Die Standortermittlungseinrichtung ermittelt den aktuellen Standort der Mobilfunkkarte in dem betreffenden Mobilfunknetz und die Entsperreinrichtung entsperrt die Mobilfunkkarte, falls sich eine Übereinstimmung des aktuellen Standortes und des Entsperrstandorts ergibt.

Die Standortermittlung wird von der Mobilfunkkarte eingeleitet, indem eine Anfrage nach dem aktuellen Standort der Mobilfunkkarte an das Mobilfunknetzwerk gesendet wird, in welchem die Mobilfunkkarte eingebucht ist. Dabei befindet sich das mobile Telekommunikationsendgerät, in welchen die Mobilfunkkarte eingesetzt ist, im Funkbereich einer oder mehreren Mobilfunkstationen des Mobilfunknetzwerks. Die Verbindung kommt dann mit derjenigen Mobilfunkstation zustande, zu der der beste Empfang besteht oder die die höchste Signalstärke aufweist. Die Mobilfunkstation sendet dann Standortdaten - beispielsweise in der Kopfinformation ("Header") der übertragenen Kommunikationsdaten - in Form einer Kennung, die den Standort der Mobilfunkstation identifiziert. Aus den empfangen Standortdaten kann die Standortermittlungseinrichtung der Mobilfunkkarte den aktuellen Standort der Mobilfunkkarte direkt entnehmen. Bei einer alternativen Variante der Ermittlung des aktuellen Standorts kann die Mobilfunkkarte Standortinformationen von mehreren Mobilfunkstationen (oder sonstigen Mobilfunksendern) erhalten und, beispielsweise anhand der einzelnen Signalstärken, den aktuellen Standort der Mobilfunkkarte genau ermitteln.

Da der Mobilfunkkarte ein Ermitteln des aktuellen Standorts nur möglich ist, wenn sie in das Mobilfunknetzwerk eingebucht ist, kann die Steuereinrichtung die Mobilfunkkarte allein zum Zweck des Standortermittelns temporär in das Mobilfunknetzwerk einbuchen und sie vorzugsweise wieder ausbuchen, wenn der aktuelle Standort ermittelt wurde oder wenn eine weitere Mobilfunkkommunikation im Rahmen des Entsperrverfahrens nicht notwendig ist. Bei diesem temporären Einbuchen zum Zwecke der Standortermittlung ist ein regulärer Kommunikationsbetrieb, also ein Absetzen oder Empfangen von Anrufen oder Nachrichten (abgesehen von Notrufen etc.), nicht möglich, um die gewünschte Schutzfunktion der Mobilfunkkartensperre nicht umgehen zu können.

Der Entsperrstandort kann entweder in einem Speicher der Mobilfunkkarte hinterlegt sein oder dem Mobilfunknetzwerk bei der Mobilfunkkommunikation mit der Mobilfunkkarte vorliegen. Falls der Entsperrstandort auf der Mobilfunkkarte gespeichert ist, kann ein Vergleich zwischen dem aktuellen Standort unmittelbar von einer Vergleichseinrichtung der Mobilfunkkarte durchgeführt werden, sobald der aktuelle Standort von der Standortermittlungseinrichtung der Mobilfunkkarte ermittelt oder dieser über das Telekommunikationsendgerät mitgeteilt wurde. Falls andernfalls der Entsperrstandort dem Mobilfunknetzwerk vorliegt, kann der Vergleich zwischen aktuellem Standort und Entsperrstandort unmittelbar von einer geeigneten Vorrichtung des Mobilfunknetzwerks durchgeführt werden, z.B. von einem zentralen Entsperrserver. Alternativ kann auch der Entsperrstandort von einer Mobilfunkstation des Mobilfunknetzwerks, in welches die Mobilfunkkarte eingebucht ist, an die Mobilfunkkarte übertragen werden, um den Standortvergleich von der Vergleichseinrichtung der Mobilfunkkarte durchführen zu lassen.

Ebenso ist es möglich, dass die Ermittlung des aktuellen Standorts der Mobilfunkkarte direkt von dem Mobilfunknetzwerk durchgeführt wird, indem das Telekommunikationsendgerät, in welches die Mobilfunkkarte eingesetzt ist, derjenigen Mobilfunkbasisstation zugeordnet wird, zu der die beste Mobilfunkverbindung besteht. Falls dann dem Mobilfunknetzwerk auch der Entsperrstandort der Mobilfunkkarte vorliegt, kann der Standortvergleich auch dort erfolgen. Falls der Entsperrstandort jedoch im Speicher der Mobilfunkkarte vorliegt, kann entweder der ermittelte aktuelle Standort von dem Mobilfunknetzwerk an die Mobilfunkkarte über eine Telekommunikationsverbindung übertragen werden und der Standortvergleich dort erfolgen, oder der Entsperrstandort kann von der Steuereinrichtung an eine Mobilfunkstation des Mobilfunknetzwerks zum dortigen Standortvergleich übertragen werden.

Falls der Standortvergleich extern von dem Mobilfunknetzwerk durchgeführt wird, kann das Vergleichsresultat an die Mobilfunkkarte übertragen und dort von ihrer Steuereinrichtung empfangen werden. Bei einem positiven Ergebnis des Standortvergleichs kann andererseits das Entsperren von dem Mobilfunknetzwerk mittels einer von einer Mobilfunkstation an die Mobilfunkkarte gesendeten Entsperranweisung initiiert werden, die von der Mobilfunkkarte mittels ihrer Steuer- und/oder Entsperreinrichtung umgesetzt wird. Diese Entsperranweisung kann vorteilhaft von der Mobilfunkkarte über eine Luftschnittstelle (OTA-Schnittstelle; "over-the-air") des Telekommunikationsendgeräts empfangen werden, so dass als Folge der Entsperranweisung die Entsperreinrichtung der Mobilfunkkarte unmittelbar aktiviert wird.

Das Entsperren der Mobilfunkkarte, ob nun von der Steuereinrichtung der Mobilfunkkarte oder mittels einer Entsperranweisung von einer Mobilfunkstation initiiert, wird von der Entsperreinrichtung der Mobilfunkkarte durchgeführt. Falls der Benutzer die Zugangskennung vergessen hat, kann das Entsperren lediglich darin bestehen, die bestehende Zugangskennung dem Benutzer über das Telekommunikationsendgerät mitzuteilen. Dies kann von der Steuer- oder Entsperreinrichtung bewerkstelligt werden, indem die Zugangskennung auf einer Anzeige des Telekommunikationsendgerät angezeigt wird oder als Kurznachricht dem Benutzer zugestellt wird. Hierbei ist es sinnvoll einen Fehlbedienungszähler der Mobilfunkkarte, der die Anzahl der nacheinander eingegebenen falschen Zugangskennungen zählt, wieder auf Null zu setzen.

Falls die Zugangskennung der Mobilfunkkarte endgültig gesperrt ist, z.B. weil der Fehlbedienungszähler bereits die erlaubte Maximalzahl falsch eingegebener Zugangskennungen erreicht hat, ist es auch möglich, eine neue Zugangskennung zu erzeugen und diese durch die Entsperreinrichtung in der Mobilfunkkarte zu aktivieren. Die neue Zugangskennung kann entweder vom Benutzer bereitgestellt werden oder von der Entsperreinrichtung der Mobilfunkkarte oder dem Mobilfunknetzwerk generiert werden. Im erstgenannten Fall wird der Benutzer von der Steuer- oder Entsperreinrichtung der Mobilfunkkarte aufgefordert, eine neue Zugangskennung beispielsweise über ein Tastenfeld des Telekommunikationsendgeräts einzugeben, während bei den beiden letzteren Fällen die neu generierte Zugangskennung dem Benutzer mitgeteilt wird, damit er sie benutzen kann. Die eingegebene oder generierte neue Zugangskennung kann zukünftig vom Benutzer verwendet werden, um die Mobilfunkkarte zu sperren und zu entsperren. Auch hierbei ist es sinnvoll, den Fehlbedienungszähler der Mobilfunkkarte auf Null zu setzen. Vorzugsweise wird die Mobilfunkkarte unwiderruflich gesperrt, falls eine vorgegebene Maximalzahl von Versuchen, die standortabhängige Entsperrung vorzunehmen, erfolglos blieb. Dies dient der zusätzlichen Absicherung der Mobilfunkkarte, da so ein wiederholtes Ausprobieren eines unberechtigten Benutzers verhindert werden kann.

Damit das vorbeschriebene Verfahren vom Benutzer eingesetzt werden kann, muss jedoch zunächst der Entsperrstandort als zwischen dem Benutzer und der Mobilfunkkarte vereinbartes Geheimnis festgelegt werden. Hierbei ist es erforderlich, dass sich der Benutzer mit der Mobilfunkkarte an demjenigen Ort einfindet, der als Entsperrstandort festlegt werden soll. Der aktuelle Standort des Telekommunikationsendgeräts, in welchem die betreffende Mobilfunkkarte eingesetzt ist, kann dann zunächst wie im vorbeschriebenen Verfahren durch eine Standortermittlungseinrichtung der Mobilfunkkarte oder direkt durch das Mobilfunknetzwerk ermittelt werden, um diesen anschließend entweder mittels einer Festlegungseinrichtung der Mobilfunkkarte im Speicher der Mobilfunkkarte zu hinterlegen oder den Entsperrstandort auf dem Mobilfunknetzwerk zentral zu hinterlegen. Auch kann der Entsperrstandort direkt von dem Mobilfunknetzwerk ermittelt werden, hierzu ist es allerdings notwendig, dass die Mobilfunkkarte ein entsprechendes Aufforderungssignal an das Mobilfunknetzwerk sendet, welches dieses veranlasst, die Mobilfunkkarte bzw. das entsprechende Telekommunikationsendgerät anhand der Signalstärke zu einer oder mehreren Mobilfunkstationen zu lokalisieren und den lokalisierten aktuellen Standort als Entsperrstandort der Mobilfunkkarte entweder zentral auf dem Mobilfunknetzwerk zu hinterlegen oder an die Mobilfunkkarte über eine Mobilfunkverbindung zum dortigen verbleiben zu übertragen.

Das Verfahren zum Entsperren der Mobilfunkkarte kann entweder von dem Benutzer der Mobilfunkkarte aktiviert werden, beispielsweise durch Drücken einer bestimmten Tastenkombination an dem Mobilfunkendgerät, oder selbständig von der Mobilfunkkarte durchgeführt werden, sobald diese sich in einem gesperrten Zustand befindet. Das erfindungsgemäße Entsperrverfahren kann eingesetzt werden, sowohl wenn der Benutzer seine Zugangskennung vergessen oder verlegt hat und die Zugangskennung also prinzipiell noch gültig ist, als auch in dem Fall, dass bereits die maximale Anzahl falscher Zugangskennungseingaben erreicht ist und die Mobilfunkkarte insofern mit der bisher gültigen Zugangskennung nicht mehr entsperrt werden kann. Für diesen Fall ist allerdings eine neue Zugangskennung notwendig.

Das Verfahren zum Festlegen eines Entsperrstandorts kann jederzeit vom Benutzer eingeleitet werden, beispielsweise über eine dazu vorgesehene Menüoption in dem Benutzermenü der Mobilfunkkarte. Eine Datenkommunikation zwischen der Mobilfunkkarte und einer Mobilfunkstation des Mobilfunknetzwerks, sei es im Rahmen der Übertragung eines aktuellen oder Entsperrstandorts oder von Vergleichsergebnissen oder sonstigen Anweisungen und Signalen, kann mittels einer beliebigen, mit einem mobilen Telekommunikationsendgerät realisierbaren Technik durchgeführt werden. Hierzu eignen sich insbesondere Kurznachrichten (SMS, MMS), automatisch generierte Telefonansagen oder sonstige Möglichkeiten der mobilen Datenkommunikation, wie z. B. der Datentransfer über eine OTA-Schnittstelle und dergleichen.

Auch kann die Lokalisierung der Mobilfunkkarte mittels eines GPS-fähiges Mobiltelefons durchgeführt werden. Die Mobilfunkkarte ist vorzugsweise eine SIM- oder eine USIM-Karte, während als Mobilfunknetz insbesondere das GSM- bzw. UMTS-Mobilfunknetz in Frage kommt. Die Zugangskennung der Mobilfunkkarte ist in der Regel eine herkömmliche PIN, während die Mobilfunkkarte in jedem beliebigen mobilen Telekommunikationsendgerät eingesetzt und betrieben werden kann, beispielsweise einem herkömmlichen Mobiltelefon oder einer sonstigen Mobilfunkkartenzugriffseinrichtung. Die Erfindung ist insofern prinzipiell nicht auf bestimmte Arten von Telekommunikationsendgeräten, Mobilfunknetzen oder Spezifikationen von Mobilfunkkarten beschränkt.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Fig. 1: eine erfindungsgemäß eingerichtete Mobilfunkkarte;
- Fig. 2: ein Flussdiagramm der Verfahren zum Festlegen eines Entsperrstandorts und zum Entsperren der Mobilfunkkarte;
- Fig. 3: eine Übersicht möglicher Ausführungsalternativen des Verfahrens zum Entsperren einer Mobilfunkkarte; und
- Fig. 4: eine schematische Darstellung einer ersten beispielhaften Ausführungsalternative zum Entsperren einer in ein Mobiltelefon eingesetzten Mobilfunkkarte durch Interaktion mit einem Mobilfunknetzwerk;
- Fig. 5: eine schematische Darstellung einer zweiten beispielhaften Ausführungsalternativen zum Entsperren einer in ein Mobiltelefon eingesetzten Mobilfunkkarte durch Interaktion mit einem Mobilfunknetzwerk; und
- Fig. 6: eine schematische Darstellung einer dritten beispielhaften Ausführungsalternativen zum Entsperren einer in ein Mobiltelefon eingesetzten Mobilfunkkarte durch Interaktion mit einem Mobilfunknetzwerk.

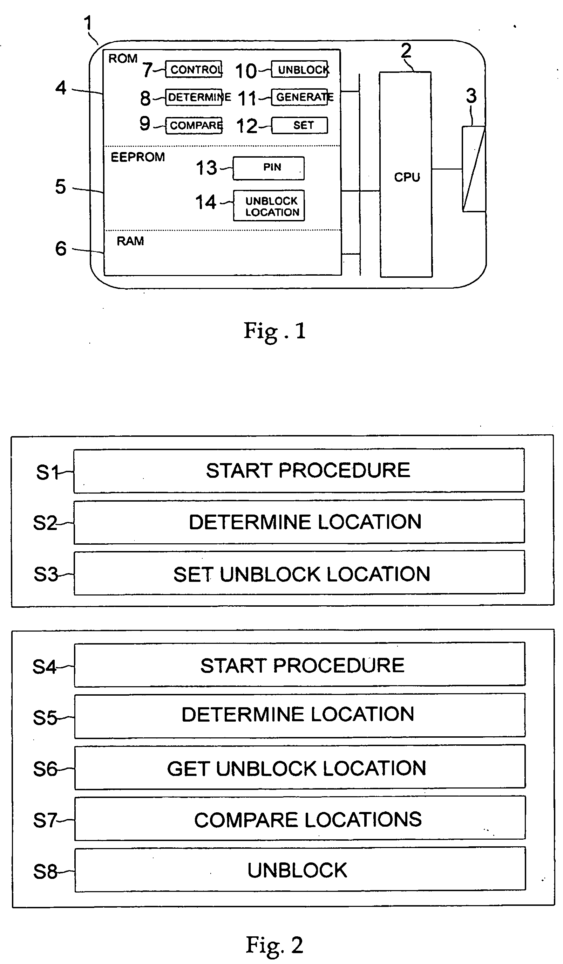

Der Aufbau einer bevorzugten Ausführungsform der Erfindung wird in Fig. 1 anhand einer herkömmlichen Mobilfunkkarte 1 schematisch veranschaulicht, die eine Schnittstelle 3 zur Datenkommunikation mit einem Telekommunikationsendgerät, einen Prozessor 2 (CPU) und eine Speicheranordnung bestehend aus einem permanenten ROM-Speicher 4, einem wiederbeschreibbaren EEPROM-Speicher 5 und einem flüchtigen RAM-Arbeitsspeicher 6 zeigt. Im ROM-Speicher 4 sind verschiedene Funktionalitäten in Form von Programmmodulen eingerichtet, die zur Implementierung der erfindungsgemäßen Verfahren auf einer Mobilfunkkarte 1 notwendig sind und die von dem Prozessor 2 ausgeführt werden können. Prinzipiell können diese Funktionalitäten auch ganz oder teilweise im wiederbeschreibbaren EEPROM-Speicher 5 angelegt werden, sie stellen jedoch zentrale Sicherheitsoperationen der Mobilfunkkarte 1 dar und sind insofern in der Regel im permanenten ROM-Speicher 4 lokalisiert, möglicherweise als Teil der Systemsoftware der Mobilfunkkarte 1. Bei der in Fig. 1 gezeigten Ausführungsform sind die erfindungswesentlichen Funktionen und Daten auf der Mobilfunkkarte 1 implementiert. Genauso ist es jedoch auch möglich, die Funktionen 8, 9,10, 11,12 zumindest teilweise außerhalb der Mobilfunkkarte 1 in dem Mobilfunknetzwerk vorzusehen.

Die Steuereinrichtung 7 (CONTROL) steuert die Funktionsweise der Mobilfunkkarte 1 im allgemeinen sowie die der erfindungsrelevanten Funktionen im besonderen. Die Standortermittlungseinrichtung 8 (DETERMINE) ermittelt den aktuellen Standort eines mobilen Telekommunikationsendgeräts, in welches die Mobilfunkkarte 1 eingesetzt ist, in einem Mobilfunknetzwerk durch Kontaktaufnehmen mit den in der Nähe befindlichen Mobilfunkbasisstationen des betreffenden Mobilfunknetzwerks. Als Telekommunikationsendgeräte im Sinne der Erfindung kommen sämtliche zur Einbuchung in ein Mobilfunknetz geeignete Gerät in Frage, insbesondere jede Form von Mobiltelefonen.

Die Vergleichseinrichtung 9 (COMPARE) vergleicht den durch die Standortermittlungseinrichtung 8 ermittelten aktuellen Standort der Mobilfunkkarte 1 mit einem im EEPROM-Speicher 5 abgelegten, individuellen Entsperrstandort 14 (UNBLOCK LOCATION) der Mobilfunkkarte 1. Die Entsperreinrichtung 10 (UNBLOCK) entsperrt in Abhängigkeit der Ausgaben der Standortermittlungseinrichtung 8 und der Vergleichseinrichtung 9 die Mobilfunkkarte 1, falls sich diese in einem gesperrten Zustand befindet. Dies ist beispielsweise dann der Fall, wenn die Mobilfunkkarte 1 nicht in ein Mobilfunknetzwerk eingebucht ist, d. h. wenn der Benutzer die Mobilfunkkarte 1 nicht mit seiner im EEPROM-Speicher 5 hinterlegten Zugangskennung 13 aktiviert und zur Mobilfunknetznutzung freigeschaltet hat. Die Möglichkeit des Entsperrens der Mobilfunkkarte 1 kann insofern dann in Anspruch genommen werden, wenn der Benutzer seine Zugangskennung 13 (PIN) vergessen oder verlegt hat, oder wenn die durch einen Fehlbedienungszähler kontrollierte maximale Anzahl von falschen Zugangskennungseingaben erreicht ist und die Zugangskennung 13 daraufhin ungültig geworden ist, so dass der Benutzer zunächst keine Möglichkeit mehr hat die Mobilfunkkarte 1 zu aktivieren.

Das erfindungsgemäße Prinzip beruht darauf, dass ein Benutzer die gesperrte Mobilfunkkarte 1 dann ohne weitere Sicherheitsüberprüfungen oder Zugangsbeschränkungen entsperren kann, wenn er sich mit dieser Mobilfunkkarte 1 an einem bestimmten Entsperrstandort 14 befindet, der vorher in einem entsprechenden Verfahren mit der Mobilfunkkarte 1 vereinbart wurde. In diesem Fall ergibt sich bei einem Vergleich eines von der Standortermittlungseinrichtung 8 ermittelten aktuellen Standorts der Mobilfunkkarte 1 mit dem im EEPROM-Speicher abgespeicherten Entsperrstandort 14 eine Übereinstimmung, woraufhin die Entsperreinrichtung 10 die Mobilfunkkarte 1 entsperrt, beispielsweise indem dem Benutzer eine bestehende Zugangskennung oder eine durch einen Kennungsgenerator 11 (GENERATE) erzeugte neue Zugangskennung mitgeteilt und aktiviert wird.

In der Regel handelt es sich bei der Mobilfunkkarte 1 um eine Mobilfunkkarte mit gebräuchlicher Spezifikation, beispielsweise eine SIM-Karte oder eine USIM-Karte. Prinzipiell ist die erfindungsgemäße Lehre jedoch auf jeden beliebigen Typ einer Mobilfunkkarte anwendbar. Die Zugangskennung 13 stellt üblicherweise den als PIN ("Personal Identification Number") bekannten Zugangscode einer Mobilfunkkarte 1 dar, der zum Einbuchen in ein Mobilfunknetzwerk von dem Benutzer über eine Tastatur eines Mobiltelefons eingegeben wird. Im Sinne des ETSI-Standards 3GPP 51.011 handelt es sich bei der Zugangskennung 13 um eine CHV1 ("Card Holder Verification").

Das Entsperren einer Mobilfunkkarte 1 mit dem erfindungsgemäßen Verfahren ist nur an dem Entsperrstandort 14 möglich, so dass der Entsperrstandort 14 ein zwischen dem Benutzer und der Mobilfunkkarte 1 vereinbartes Geheimnis repräsentiert. Die Mobilfunkkarte 1 ist insofern vor einem unbefugten Entsperren geschützt, da nur der Benutzer den Entsperrstandort 14 kennt. Selbstverständlich ist es auch möglich, mehrere Entsperrstandorte 14 oder mehrere Zugangskennungen 13 mit individuellen Entsperrstandorten 14 vorzusehen.

Zum Einrichten des Entsperrstandorts 14 umfasst die Mobilfunkkarte 1 eine Festlegungseinrichtung 12 (SET), die den durch die Ermittlungseinrichtung 8 ermittelten aktuellen Standort als Entsperrstandort vereinbart und im EEPROM-Speicher 5 ablegt.

Der Mobilfunkstandard GSM-Phase 2+ ermöglicht es, auf einer Mobilfunkkarte 1 mittels des "SIM Applikation Toolkit" neue über ein Mobiltelefon aufrufbare Menüs zu installieren. Über derartige Menüs ist es dann beispielsweise möglich, die Standortermittlungseinrichtung 8 und/oder die Festlegungseinrichtung 12 anzusprechen, um den aktuellen Standort des Mobiltelefons innerhalb des Mobilfunknetzes ermitteln zu lassen und gegebenenfalls als Entsperrstandort 14 im EEPROM-Speicher 5 zu hinterlegen.

Neben dem üblichen Fehlbedienungszähler (nicht dargestellt), der die Anzahl der falsch eingegebenen Zugangskennungen zählt, um die Mobilfunkkarte 1 bei Überschreiten einer Maximalzahl zu sperren, ist es sinnvoll auch einen Entsperrversuchszähler (nicht dargestellt) auf der Mobilfunkkarte 1 zu implementieren. Ein solcher Entsperrrversuchszähler zählt bei einer gesperrten Mobilfunkkarte 1 die Anzahl der erfolglos durchgeführten aktiven Entsperrversuche. Bei Überschreiten einer Maximalzahl kann die Mobilfunkkarte 1 aus Sicherheitsgründen unwiderruflich gesperrt werden, um ein wiederholtes Ausprobieren eines unberechtigten Benutzers zu unterbinden, der den vereinbarten Entsperrstandort 14 nicht kennt. Eine derartige unwiderruflich gesperrte Mobilfunkkarte muss dann zum Entsperren beispielsweise dem Kartenherausgeber oder Mobilfunknetzbetreiber vorgelegt werden oder kann möglicherweise gar nicht mehr entsperrt werden.

Fig. 2 illustriert in einer flussdiagrammartigen Übersicht die Grundschritte eines Verfahrens zum Einrichten des Entsperrstandorts 14 einer Mobilfunkkarte 1 (Schritte S1 bis S3) sowie eines Verfahrens zum Entsperren einer gesperrten Mobilfunkkarte 1 (Schritte S4 bis S8).

Mittels des durch die Schritte S1 bis S3 veranschaulichten Verfahrens wird der Entsperrstandort 14 ausgewählt und festgelegt. Es wird in Schritt S1 von dem Benutzer eingeleitet (START SET PROCEDURE), beispielsweise durch Auswählen einer entsprechende Option an einem Mobiltelefon. In Schritt S2 wird der aktuelle Standort des Mobiltelefons und somit der in dem Mobiltelefon eingesetzten Mobilfunkkarte 1 ermittelt (DETERMINE LOCATION), während der ermittelte aktuelle Standort in Schritt S3 als Entsperrstandort 14 festgelegt wird (SET UNBLOCK LOCATION). Dieses Verfahren kann vom Benutzer prinzipiell beliebig oft wiederholt werden, er kann also den Entsperrstandort 14 auch einer längeren Abwesenheit von seinem gewöhnlichen Aufenthaltsort anpassen.

Wenn der Entsperrstandort 14 durch das Verfahren der Schritte S1 bis S3 festgelegt wurde, kann der Benutzer der Mobilfunkkarte 1 das Verfahren der Schritte S4 bis S8 durchführen, um seine Mobilfunkkarte 1 im Falle einer Sperrung ortsabhängig zu entsperren. Das Einleiten dieses Verfahrens (START PROCEDURE) in Schritt S4 kann dabei entweder aktiv von dem Benutzer vorgenommen werden, beispielsweise indem er eine besondere Tastenkombination an seinem Mobiltelefon wählt, die trotz gesperrter Mobilfunkkarte 1 der Steuereinrichtung 7 der Mobilfunkkarte 1 ein Signal übermittelt, dass das Entsperrverfahren durchgeführt werden soll. Andererseits ist es auch möglich, dass die gesperrte Mobilfunkkarte 1 das Verfahren autonom startet, beispielsweise in regelmäßigen zeitlichen Abständen.

In Schritt S5 wird der aktuelle Standort des Mobiltelefons analog zu Schritt S2 ermittelt (DETERMINE LOCATION). Dieses Ermitteln des aktuellen Standorts erfordert eine Mobilfunktätigkeit der Mobilfunkkarte 1, da die Mobilfunkkarte 1 innerhalb des Mobilfunknetzes lokalisiert wird und insofern Kontakt zu einer oder mehreren Mobilfunkstationen aufnehmen muss, die sich in der Umgebung befinden. Das hierfür notwendige Einbuchen der Mobilfunkkarte 1 in das Mobilfunknetzwerk kann jedoch in einem Notbetrieb temporär erfolgen, der einen regulären Telekommunikationsbetrieb der Mobilfunkkarte 1 verhindert und die Sperrwirkung der Mobilfunkkarte 1 nicht beim Ermitteln des aktuellen Standortes in Schritt S5 umgeht. Während des temporären Einbuchens zum Zwecke der Standortermittlung kann die Mobilfunkkarte 1 z. B. mittels der Funktionen "Call Control" und "SMS-Control" einen Missbrauch verhindern, indem Anrufe oder Kurznachrichten von der Mobilfunkkarte 1 abgeblockt werden.

Abgesehen von dem lediglich temporären Einbuchen der Mobilfunkkarte 1 in das Mobilfunknetzwerk im Rahnen des Entsperrverfahrens, ist die Wirkungsweise der Schritte S2 und S5 identisch. Die Standortbestimmung geht von der Mobilfunkkarte 1 aus, indem sie das Senden eines entsprechenden Signals über das Mobiltelefon an das Mobilfunknetzwerk veranlasst, um die Standortbestimmung einzuleiten. Zu diesem Zeitpunkt ist die Mobilfunkkarte 1 in das Mobilfunknetzwerk eingebucht und steht mit derjenigen Mobilfunkstation des Mobilfunknetzwerks in Mobilfunkverbindung, zu der die beste Kommunikationsverbindung besteht. Der Standort dieser Mobilfunkstation kann dann als aktueller Standort der Mobilfunkkarte 1 interpretiert und in Form von Standortdaten an die Mobilfunkkarte 1 gesendet werden. Die Standortdaten sind möglicherweise in den Verwaltungsdaten ("Header") einer Mobilfunknachricht enthalten und gelangen somit immer auch an die Mobilfunkkarte 1. Die Standortermittlungseinrichtung 8 der Mobilfunkkarte 1 muss die Standortinformation der Mobilfunkstation dann nur noch aus den Verwaltungsdaten der Nachricht extrahieren. Falls der aktuelle Standort einer Mobilfunkkarte nicht gleich dem Standort der nächstgelegenen Mobilfunkstation ist, sondern genauer (d.h. höher örtlich aufgelöst) identifiziert werden soll, kann der aktuelle Standort in Bezug auf die Standorte mehrerer Mobilfunkstationen in einem bestimmten Umkreis der Mobilfunkkarte 1 ermittelt werden. Hierbei werden dann Standortdaten, möglicherweise zusammen mit weiteren Informationen, wie z.B. Signalstärke, genauere geometische Informationen von mehrerer Mobilfunkstationen etc., empfangen und von der Standortermittlungseinrichtung 8 zur Berechnung des aktuellen Standorts der Mobilfunkkarte 1 verwendet. Ebenso ist eine Standortbestimmung über GPS möglich.

In Schritt S6 wird der festgelegte Entsperrstandort 14 abgerufen GET UNBLOCK LOCATION), um ihn in Schritt S7 mit dem in Schritt S5 ermittelten aktuellen Standort zu vergleichen (COMPARE LOCATIONS). Falls diese beiden Standorte übereinstimmen, wird die Mobilfunkkarte in Schritt S8 schließlich entsperrt (UNBLOCK).

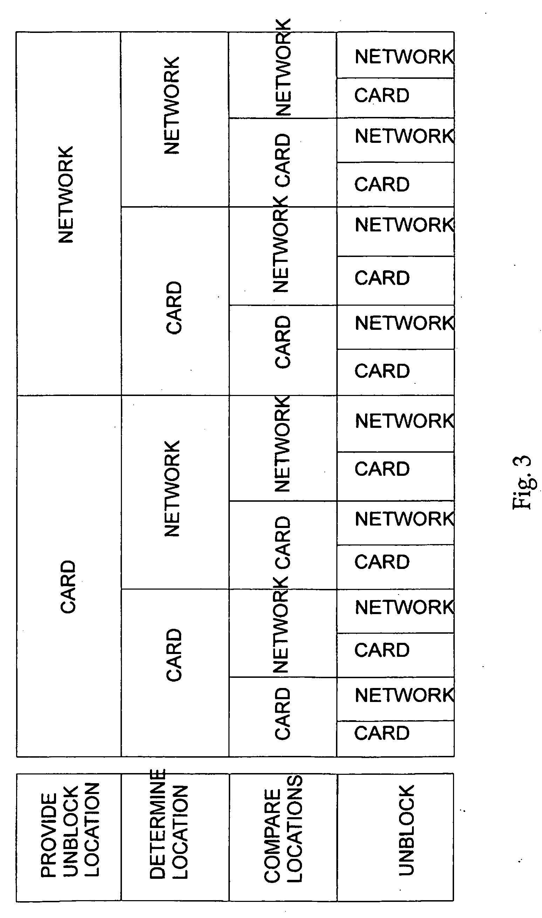

Bei der anhand Fig.1 beschriebenen Ausführungsform werden alle wesentlichen Schritte der in Fig. 2 skizzierten Verfahren gesteuert von der Steuereinrichtung 7 von der Mobilfunkkarte 1 durchgeführt. So werden die Standortermittlungsschritte S2 und S5 von der Standortermittlungseinrichtung 8 ausgeführt, der Festlegungsschritt S3 von der Festlegungseinrichtung 12, der Vergleichsschritt S7 von der Vergleichseinrichtung 9 und der Entsperrschritt S8 von der Entsperreinrichtung 10. Demgegenüber ist es jedoch auch möglich, Ausführungsalternativen zu diesem Grundverfahren vorzusehen, die auf einem teilweise zentralisierten Auslagern von Funktionen und Daten auf das Mobilfunknetzwerk bzw. eine Mobilfunkstation des Mobilfunknetzwerks und insofern auf einer Kommunikation der Mobilfunkkarte 1 mit dem Mobilfunknetzwerk beruhen. Fig. 3 zeigt in einer schematischen Übersicht mögliche Ausführungsformen des erfindungsgemäßen Entsperrverfahrens (Fig. 1, Schritte S4 bis S8), bei welchen die erfindungswesentlichen Schritte jeweils optional entweder von der Mobilfunkkarte 1 (CARD) oder dem Mobilfunknetzwerk (NETWORK) ausgeführt werden.

Bei dem erfindungsgemäßen Verfahren zum Entsperren einer Mobilfunkkarte 1 besteht eine Verfahrensoption (Fig. 3, erste Zeile; PROVIDE UNBLOCK LOCATION) darin, den Entsperrstandort 14 entweder auf der Mobilfunkkarte 1 abzulegen oder zentral bei dem Mobilfunknetzwerk so zu hinterlegen, dass eine mit der Mobilfunkkarte 1 in Kontakt stehende Mobilfunkstation auf den Entsperrstandort zugreifen kann. Eine weitere Verfahrensoption (Fig. 3, zweite Zeile; DETERMINE LOCATION) betrifft das Ermitteln des aktuellen Standorts in Schritt S5. Dieser Schritt kann von der Mobilfunkkarte 1 durchgeführt werden, indem Standortinformationen verschiedener Mobilfunkstationen verarbeitet werden, oder die Mobilfunkkarte 1 kann von dem Mobilfunknetzwerk lokalisiert werden, beispielsweise mittels der standortbezogenen "Location Based Services" des Mobilfunknetzwerks.

Natürlich bringen diese Verfahrensoptionen verschiedene Kommunikationserfordernisse mit sich, da beispielsweise für den Fall, dass der aktuelle Standort der Mobilfunkkarte 1 und der Entsperrstandort 14 an unterschiedlichen Stellen hinterlegt sind, diese Informationen zur Weiterverarbeitung entweder auf der Mobilfunkkarte 1 oder bei dem Mobilfunknetzwerk zusammengeführt werden müssen. Demzufolge ist eine weitere Verfahrensoption (Fig. 3, dritte Zeile; COMPARE LOCATIONS), den Vergleichsschritt S7 entweder von der Vergleichseinrichtung 9 der Mobilfunkkarte 1 durchführen zu lassen oder von dem Mobilfunknetzwerk oder einer Mobilfunkstation, mit welcher die Mobilfunkkarte 1 in Kontakt steht. Das eigentliche Entsperren der Mobilfunkkarte in Schritt S8 wird in jedem Fall von der Entsperreinrichtung 10 der Mobilfunkkarte 1 durchgeführt, da diese auf Daten einwirkt, die auf der Mobilfunkkarte 1 physikalisch vorliegen. Allerdings besteht eine weitere Verfahrensoption (Fig. 3, vierte Zeile; UNBLOCK) darin, diese Entsperroperation von einer Einrichtung der Mobilfunkkarte 1, beispielsweise der Steuereinrichtung 7, oder mittels einer kartenexternen Entsperranweisung des Mobilfunknetzwerks einzuleiten, die mittels einer Mobilfunkstation an die Mobilfunkkarte 1 übertragen wird. Eine mögliche weitere Verfahrensoption (nicht dargestellt) betrifft das bedarfsweise Erzeugen einer neuen Zugangskennung, was durch den Benutzer selbst, den Kennungsgenerator 11 der Mobilfunkkarte 1 oder von dem Mobilfunknetzwerk durchgeführt werden kann.

Auf diese Weise ergibt sich aus den verschiedenen Verfahrensoptionen eine Vielzahl verschiedener Ausführungsalternativen des Entsperrverfahrens gemäß der Schritte S4 bis S8. So ist beispielsweise das in dem Schema der Fig. 3 durch die äußerst links angeordneten Optionen bestimmte Verfahren dadurch charakterisiert, dass alle Schritte von der Mobilfunkkarte 1 der Fig. 1 durchgeführt werden. Demgegenüber ist das sich aus den äußerst rechts angeordneten Optionen ergebende Verfahren dadurch charakterisiert, dass die vier beschriebenen Schritte von dem Mobilfunknetzwerk oder einer Mobilfunkstation durchgeführt werden. Dies kann dann dadurch realisiert werden, dass eine zu entsperrende Mobilfunkkarte 1 als initialen Schritt ein Signal an eine Mobilfunkstation überträgt, um das Mobilfunknetzwerk zu veranlassen, die gesperrte Mobilfunkkarte 1 zu entsperren. Das Mobilfunknetzwerk, dem der Entsperrstandort der Mobilfunkkarte 1 vorliegt, ermittelt dann den aktuellen Standort der Mobilfunkkarte 1, vergleicht die beiden Standorte und sendet im Falle der Übereinstimmung eine Entsperranweisung an die Mobilfunkkarte 1 um die Entsperrung einzuleiten.

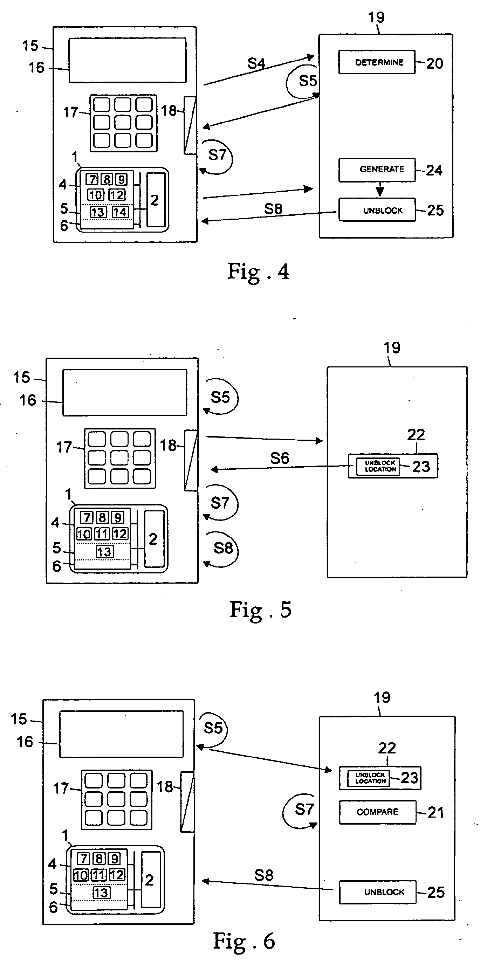

Nachfolgend werden im Zusammenhang mit den Figuren 4 bis 6 drei der Ausführungsalternativen der Fig. 3 genauer beschreiben:

Fig. 4 illustriert eine Ausführungsalternative, bei der der Entsperrstandort 14 im EEPROM-Speicher 5 der Mobilfunkkarte 1 vorliegt, während die Figuren 5 und 6 Ausführungsalternativen illustrieren, bei denen der Entsperrstandort 23 nur dem Mobilfunknetzwerk bekannt ist. Die Figuren 4 bis 6 zeigen jeweils ein Mobiltelefon 15 mit eingesetzter Mobilfunkkarte 1, Tastenfeld 17, Anzeige 16 und einer Mobilfunkkommunikationsschnittstelle 18. Ferner ist als Repräsentant eines Mobilfunknetzwerks 19 jeweils eine Mobilfunkstation mit verschiedenen Einrichtungen 20, 21, 22, 23, 24, 25 abgebildet. Alle diese Einrichtungen können entweder direkt in einer Mobilfunkstation vorhanden sein, mit welcher die Mobilfunkkarte 1 in Kontakt steht, oder an andere Stelle in dem Mobilfunknetzwerk 19 angeordnet sein, z.B. auf einem zentralen Server oder dergleichen. Aus Darstellungsgründen und weil die genaue Positionierung der Einrichtungen 20 - 25 im Mobilfunknetzwerk für die vorliegende Erfindung unwesentlich ist, wird in den Figuren 4 bis 6 das Mobilfunknetzwerk 19 durch eine Mobilfunkstation symbolisiert, die sämtliche relevanten Einrichtungen beherbergt.

Gemäß Fig. 4 wird die gesperrte Mobilfunkkarte 1 entsperrt, indem zunächst das Verfahren zum Entsperren durch ein Signal in Schritt S4 eingeleitet wird, mit welchem das Mobilfunknetzwerk 19 veranlasst wird, den aktuellen Standort des Mobiltelefons 15 zu ermitteln. Dies wird mit einer Standortermittlungseinrichtung 20 (DETERMINE) des Mobilfunknetzwerks 19 in Schritt S5 durchgeführt. Der ermittelte aktuelle Standort wird anschließend über eine Mobilfunkverbindung an die Mobilfunkkarte 1 übertragen, wo der empfangene aktuelle Standort in Schritt S7 mit dem im EEPROM-Speicher 5 der Mobilfunkkarte 1 vorliegenden Entsperrstandort 14 verglichen wird. Für den Fall, dass diese Standorte übereinstimmen, sendet die Steuereinrichtung 7 der Mobilfunkkarte 1 ein weiteres Signal an das Mobilfunknetzwerk 19, wonach dieses eine neue Zugangskennung durch den Kennungsgenerator 24 (GENERATE) erzeugen soll, beispielsweise als Zufallszahl. Die neue Zugangskennung wird der Entsperreinrichtung 25 (UNBLOCK) dem Mobilfunknetzwerk 19 übergeben. Das Mobilfunknetzwerk 19 überträgt in Schritt S8 eine Entsperranweisung einer Entsperreinrichtung 25 mit der neuen Zugangskennung an die Mobilfunkkarte 1, um diese zu veranlassen, die neue Zugangskennung einzurichten. Die Entsperranweisung und/ oder die neue Zugangskennung wird hierbei vorzugsweise verschlüsselt übertragen.

Als Übertragungsweg einer derartigen Entsperranweisung eignet sich hierbei insbesondere eine Luftschnittstelle 18 (OTA; Over-The-Air-Schnittstelle) des Mobiltelefons 15, da derartige Schnittstellen zur kabellosen Fernkonfiguration von Mobilfunkkarten verwendet werden können. Die eingehende Entsperranweisung wird kartenintern von der Steuereinrichtung 7 der Mobilfunkkarte 1 interpretiert und hat das Ausführen einer Entsperroperation zur Folge, indem die Entsperreinrichtung 10 angewiesen wird, die aktuelle Zugangskennung 13 durch die empfangene neue Zugangskennung zu ersetzen und diese zur weiteren Benutzung durch den Benutzer zu aktivieren. Zusätzlich wird die neue Zugangskennung dem Benutzer mitgeteilt, was vorzugsweise über eine entsprechende optische Nachricht auf der Anzeige 16, eine Kurznachricht oder eine sonstige Mitteilung erfolgt, z.B. auch akustisch oder mittels eines Ausdrucks.

Anstelle des Mobiltelefons 19 kann die Mobilfunkkarte auch mit Hilfe einer sonstigen mobilfunkfähigen Kartenzugriffseinrichtung entsperrt werden, beispielsweise mittels eines Terminals in einer Filiale des Kartenherausgebers oder des Netzbetreibers oder an einem öffentlichen Ort. Hierfür ist jedoch die Voraussetzung, dass ein derartiges Terminal am vereinbarten Entsperrstandort steht bzw. dass der Entsperrstandort an diesem Terminal eingerichtet wurde.

Bei der in Fig. 5 illustrierten Ausführungsalternative beschränkt sich die Mitwirkung des Mobilfunknetzwerks 19 auf das Vorhalten und Bereitstellen des Entsperrstandorts 23 (UNBLOCK LOCATION) in einem Speicher 22 des Mobilfunknetzwerk 19. Das Entsperrverfahren besteht insofern aus einem Ermitteln des aktuellen Standorts des Mobiltelefons 15 aus empfangenen Standortdaten einer oder mehrerer Mobilfunkstationen durch die Ermittlungseinrichtung 8 der Mobilfunkkarte 1 (Schritt S5), dem Anfordern des Entsperrstandorts 23 bei dem Mobilfunknetzwerk 19 und dem Übertragen der des Entsperrstandorts 23 an die Mobilfunkkarte 1 in Schritt S6. In Schritt S7 werden anschließend der Entsperrstandort 23 und der aktuelle Standort verglichen, um die Mobilfunkkarte 1 in Schritt S8 gegebenenfalls zu entsperren.

In Fig. 6 wird der aktuelle Standort der Mobilfunkkarte 1 durch die Standortermittlungseinrichtung 8 wie oben beschrieben ermittelt (Schritt S5) und an das Mobilfunknetzwerk 19 übertragen, dem in einem Speicher 22 der Entsperrstandort 23 vorliegt. Das Mobilfunknetzwerk 19 vergleicht den Entsperrstandort 23 mit dem von der Mobilfunkkarte 1 übertragenen aktuellen Standort mittels einer Vergleichseinrichtung 21 und überträgt mittels der Entsperreinrichtung 24 in Schritt S8 eine Entsperranweisung über die Luftschnittstelle 18 des Mobiltelefons 19 an die Mobilfunkkarte 1.

Die eigentliche Entsperroperation wird in jedem Falle, ob nun durch eine Entsperranweisung von dem Mobilfunknetzwerk 19 oder die Steuereinrichtung 7 initiiert, von der Entsperreinrichtung 10 der Mobilfunkkarte 1 durchgeführt. Dies kann, wie beispielsweise in Fig. 4 illustriert, dahin bestehen, dass eine bereitgestellte Zugangskennung als neue Zugangskennung des Benutzers eingerichtet und dem Benutzer mitgeteilt wird. Eine andere Möglichkeit ist, den Benutzer mittels einer auf der Anzeige 16 angezeigten Benachrichtigung aufzufordern, über das Tastenfeld 17 eine neue Zugangskennung einzugeben, die anschließend von der Entsperreinrichtung 10 als neue Zugangskennung eingerichtet wird. Ebenso ist es möglich, dass die Mobilfunkkarte 1 mittels des Kennungsgenerators 11 eine neue Zugangskennung selbst erzeugt.

Falls die Mobilfunkkarte 1 zwar gesperrt ist, die Zugangskennung 13 aber noch nicht so oft vom Benutzer falsch eingegeben wurde, dass eine neue Zugangskennung benötigt wird, ist es auch möglich die bestehende Zugangskennung 13 dem Benutzer beispielsweise über die Anzeige 16 mitzuteilen. Vorzugsweise kann die maximale Anzahl der erlaubten Fehleingaben der Zugangskennung höher als die allgemein üblichen drei Fehlversuche eingestellt werden.

## Patentansprüche

1. Verfahren zum Entsperren einer mittels einer Zugangskennung (13) eines Benutzers gesperrten Mobilfunkkarte (1), mit den Schritten:
- Ermitteln (S5) eines aktuellen Standorts eines Telekommunikationsendgeräts (15), in das die Mobilfunkkarte (1) eingesetzt ist, in einem Mobilfunknetz;
- Vergleichen (S7) des aktuellen Standorts mit einem hinterlegten Entsperrstandort (14; 23); und
- Entsperren (S8) falls der aktuelle Standort mit dem Entsperrstandort (14; 23) übereinstimmt;
in dem Schritt des Entsperrens die Mobilfunkkarte (1) entsperrt wird;
**dadurch gekennzeichnet, dass** beim Schritt des Ermittelns (S5) die Mobilfunkkarte (1) zum Zweck des Ermittelns des aktuellen Standorts in das Mobilfunknetz temporär eingebucht wird, und
die temporär eingebuchte Mobilfunkkarte (1) für einen regulären Telekommunikationsbetrieb gesperrt ist.

2. Verfahren nach Anspruch 1, **dadurch gekennzeichnet, dass** beim Schritt des Ermittelns (S5) eine Anforderung von der Mobilfunkkarte (1) gesendet wird, um Standortdaten anzufordern.

3. Verfahren nach Anspruch 2, **dadurch gekennzeichnet, dass** beim Schritt des Ermittelns (S5) Standortdaten an die Mobilfunkkarte (1) gesendet werden.

4. Verfahren nach einem der Ansprüche 2 oder 3, **dadurch gekennzeichnet, dass** die Standortdaten den ermittelten aktuellen Standort enthalten und beim Schritt des Ermittelns (S5) der aktuelle Standort den Standortdaten entnommen wird.

5. Verfahren nach Anspruch 2 oder 3, **dadurch gekennzeichnet, dass** beim Schritt des Ermittelns (S5) die Mobilfunkkarte (1) aus den Standortdaten den aktuellen Standort ermittelt.

6. Verfahren nach einem der Ansprüche 1 bis 5, **dadurch gekennzeichnet, dass**, wenn der Entsperrstandort (14; 23) auf der Mobilfunkkarte (1) hinterlegt ist, beim Schritt des Vergleichens (S7) der Entsperrstandort (14; 23) mit dem ermittelten aktuellen Standort von der Mobilfunkkarte (1) verglichen wird.

7. Verfahren nach einem der Ansprüche 1 bis 5, **dadurch gekennzeichnet, dass**, wenn der Entsperrstandort (23) nicht auf der Mobilfunkkarte (1) hinterlegt ist, der Entsperrstandort (23) an die Mobilfunkkarte (1) übertragen wird und beim Schritt des Vergleichens (S7) mit dem ermittelten aktuellen Standort von der Mobilfunkkarte (1) verglichen wird.

8. Verfahren nach einem der Ansprüche 1 bis 5, **dadurch gekennzeichnet, dass**, wenn der Entsperrstandort (23) von der Mobilfunkkarte (1) getrennt in einem Mobilfunknetzwerk (19) hinterlegt ist, beim Schritt des Vergleichens (S7) der Entsperrstandort (23) mit dem ermittelten aktuellen Standort extern verglichen wird.

9. Verfahren nach einem der Ansprüche 1 bis 5, **dadurch gekennzeichnet, dass**, wenn der Entsperrstandort (14) auf der Mobilfunkkarte (1) hinterlegt ist, beim Schritt des Vergleichens (S7) der Entsperrstandort (14) an ein Möbilfunknetzwerk (19) übertragen wird und extern mit dem ermittelten aktuellen Standort verglichen wird.

10. Verfahren nach einem der Ansprüche 1 bis 9, **dadurch gekennzeichnet, dass** der Schritt des Entsperrens (S8) von der Mobilfunkkarte (1) durchgeführt wird.

11. Verfahren nach Anspruch 10, **dadurch gekennzeichnet, dass** beim Schritt des Entsperrens (S8) eine Entsperranweisung von extern an die Mobilfunkkarte (1) übertragen wird und von der Mobilfunkkarte (1) derart umgesetzt wird, dass die Mobilfunkkarte (1) entsperrt wird.

12. Verfahren nach Anspruch 11, **dadurch gekennzeichnet, dass** beim Schritt des Entsperrens (S8) die Entsperranweisung von einer Luftschnittstelle (18) des Telekommunikationsendgeräts (15) empfangen wird.

13. Verfahren nach einem der Ansprüche 10 bis 12, **dadurch gekennzeichnet, dass** beim Schritt des Entsperrens (S8) eine bestehende Zugangskennung (13) dem Benutzer über das Telekommunikationsendgerät (15) mitgeteilt wird.

14. Verfahren nach einem der Ansprüche 10 bis 12, **dadurch gekennzeichnet, dass** beim Schritt des Entsperrens (S8) der Benutzer über das Telekommunikationsendgerät (15) aufgefordert wird, eine neue Zugangskennung bereitzustellen, und dass die bereitgestellte neue Zugangskennung als Zugangskennung (13) aktiviert wird.

15. Verfahren nach einem der Ansprüche 10 bis 12, **dadurch gekennzeichnet, dass** beim Schritt des Entsperrens (S8) eine neue Zugangskennung von der Mobilfunkkarte (1) oder einem Mobilfunknetzwerk (19) bereitgestellt und dem Benutzer über das Telekommunikationsendgerät (15) mitgeteilt wird, und dass die bereitgestellte neue Zugangskennung aktiviert wird.

16. Verfahren nach einem der Ansprüche 10 bis 15, **dadurch gekennzeichnet, dass** beim Schritt des Entsperrens (S8) ein Fehlbedienungszähler der Mobilfunkkarte (1) initialisiert wird.

17. Verfahren nach einem der Ansprüche 1 bis 16, **dadurch gekennzeichnet, dass** das Verfahren von einem Benutzer der Mobilfunkkarte (1) über das Telekommunikationsendgerät (15) aktiv eingeleitet wird.

18. Verfahren nach Anspruch 17, **dadurch gekennzeichnet, dass** die Mobilfunkkarte (1) unwiderruflich gesperrt wird, falls eine vorgegebene Anzahl von erfolglosen Versuchen, das Entsperrverfahren einzuleiten, erreicht wird.

19. Verfahren zum Konfigurieren einer Entsperrfunktionalität einer Mobilfunkkarte (1), mit den Schritten:
- Festlegen (S3) eines Standorts als Entsperrstandort (14; 23) für die Mobilfunkkarte (1), wobei ein Entsperrstandort (14; 23) den Standort für die Mobilfunkkarte (1) definiert, an dem sich die Mobilfunkkarte (1) entsperren lässt, wenn sie mittels einer Zugangskennung (13) des Benutzers gesperrt ist
- Ermitteln (S2) eines aktuellen Standorts eines mobilen Telekommunikationsendgeräts (15), in welches die Mobilfunkkarte (1) eingesetzt ist, in einem Mobilfunknetz; und **dadurch gekennzeichnet, daß** in dem Schritt des Festlegens (S3) ein ermittelter aktueller Standort als der Entsperrstandort (14; 23) für die Mobilfunkkarte (1) festgelegt wird, und wobei beim Schritt des Ermittelns (S2) die Mobilfunkkarte (1) in das Mobilfunknetz eingebucht wird, falls sie nicht eingebucht ist.

20. Verfahren nach Anspruch 19, **dadurch gekennzeichnet, dass** beim Schritt des Ermittelns (S2) eine Aufforderung von der Mobilfunkkarte (1) gesendet wird, um Standortdaten anzufordern.

21. Verfahren nach Anspruch 20, **dadurch gekennzeichnet, dass** beim Schritt des Ermittelns (S2) Standortdaten an die Mobilfunkkarte (1) gesendet werden.

22. Verfahren nach Anspruch 20 oder 21, **dadurch gekennzeichnet, dass** die Standortdaten den ermittelten aktuellen Standort enthalten.

23. Verfahren nach Anspruch 20 oder 21, **dadurch gekennzeichnet, dass** beim Schritt des Ermittelns (S2) die Mobilfunkkarte (1) aus den Standortdaten den aktuellen Standort ermittelt.

24. Verfahren nach einem der Ansprüche 19 bis 23, **dadurch gekennzeichnet, dass** beim Schritt des Festlegens (S3) der ermittelte aktuelle Standort als Entsperrstandort (14) auf der Mobilfunkkarte (1) hinterlegt wird.

25. Verfahren nach einem der Ansprüche 19 bis 23, **dadurch gekennzeichnet, dass** beim Schritt des Festlegens (S3) der ermittelte aktuelle Standort als Entsperrstandort (23) von der Mobilfunkkarte getrennt in einem Mobilfunknetzwerk (19) hinterlegt wird.

26. Verfahren nach einem der Ansprüche 19 bis 25, **dadurch gekennzeichnet, dass** das Verfahren von einem Benutzer der Mobilfunkkarte (1) über das Telekommunikationsendgerät (15) eingeleitet wird.

27. Mobilfunkkarte (1) umfassend eine Steuereinrichtung (7) und einen Speicher (5), in welchem eine Zugangskennung (13) eines Benutzers hinterlegt ist, ferner, dass die Mobilfunkkarte (1) eine Standortermittlungseinrichtung (8) und eine Entsperreinrichtung (10) umfasst, wobei
- die Standortermittlungseinrichtung (8) eingerichtet ist, einen aktuellen Standort der Mobilfunkkarte (1) in einem Mobilfunknetz über ein Telekommunikationsendgerät (15) zu ermitteln, in welches die Mobilfunkkarte (1) einsetzbar ist; und **dadurch gekennzeichnet, daß**
- die Entsperreinrichtung (10) so eingerichtet ist mittels einer Zugangskennung (13) des Benutzers gesperrte Mobilfunkkarte (1) zu entsperren, falls ein ermittelter aktueller Standort und ein vorgegebener Entsperrstandort (14; 23) übereinstimmen;
wobei die Mobilfunkkarte (1) zum Zweck des Ermittelns des aktuellen Standorts in das Mobilfunknetz sich temporär einbucht und
wobei die temporär eingebuchte Mobilfunkkarte (1) für einen regulären Telekommunikationsbetrieb gesperrt ist.

28. Mobilfunkkarte (1) nach Anspruch 27, **dadurch gekennzeichnet, dass** die Steuereinrichtung (7) eingerichtet ist, die Mobilfunkkarte (1) nur zum Zweck des Ermittelns des aktuellen Standorts in das Mobilfunknetz temporär einzubuchen.

29. Mobilfunkkarte (1) nach Anspruch 27 oder 28, **dadurch gekennzeichnet, dass** die Steuereinrichtung (7) eingerichtet ist, die Mobilfunkkarte (1) während des temporären Einbuchens für einen regulären Telekommunikationsbetrieb zu sperren.

30. Mobilfunkkarte (1) nach einem der Ansprüche 27 bis 29, **dadurch gekennzeichnet, dass** die Standortermittlungseinrichtung (8) eingerichtet ist, ein Senden eines Anforderungssignals zu veranlassen, um Standortdaten anzufordern und die Steuereinrichtung (7) eingerichtet ist, das Anforderungssignal über das Telekommunikationsendgerät (15) zu versenden.

31. Mobilfunkkarte (1) nach Anspruch 30, **dadurch gekennzeichnet, dass** die Steuereinrichtung (7) eingerichtet ist, Standortdaten über das Telekommunikationsendgerät (15) zu empfangen, und die Standortermittlungseinrichtung (8) eingerichtet ist, entweder anhand der empfangenen Standortdaten den aktuellen Standort zu ermitteln oder, falls die Standortdaten den aktuellen Standort enthalten, aus den empfangenen Standortdaten den aktuellen Standort zu entnehmen.

32. Mobilfunkkarte (1) nach einem der Ansprüche 27 bis 31, **dadurch gekennzeichnet, dass** der vorgegebene Entsperrstandort (14; 23) in dem Speicher (5) der Mobilfunkkarte (1) hinterlegt ist.

33. Mobilfunkkarte (1) nach einem der Ansprüche 27 bis 32, **dadurch gekennzeichnet, dass** die Steuereinrichtung (7) eingerichtet ist, einen extern vorliegenden Entsperrstandort (23) über ein Telekommunikationsendgerät (15), in welches die Mobilfunkkarte (1) einsetzbar ist, zu empfangen.

34. Mobilfunkkarte (1) nach einem der Ansprüche 27 bis 33, **gekennzeichnet durch** eine Vergleichseinrichtung (9), die eingerichtet ist, den ermittelten aktuellen Standort mit dem vorgegebenen Entsperrstandort (14; 23) zu vergleichen.

35. Mobilfunkkarte (1) nach einem der Ansprüche 27 bis 31, **dadurch gekennzeichnet, dass** die Steuereinrichtung (7) eingerichtet ist, den ermittelten aktuellen Standort über das Telekommunikationsendgerät (15) an ein Mobilfunknetzwerk (19) zu übertragen.

36. Mobilfunkkarte (1) nach Anspruch 35, **dadurch gekennzeichnet, dass** die Steuereinrichtung (7) eingerichtet ist, ein Resultat eines Vergleichs zwischen dem aktuellen Standort und einen extern vorgegebenen Entsperrstandort (23) über das Telekommunikationsendgerät (15) von dem Mobilfunknetzwerk (19) zu empfangen.

37. Mobilfunkkarte (1) nach Anspruch 35, **dadurch gekennzeichnet, dass** die Steuereinrichtung (7) eingerichtet ist, eine Entsperranweisung von der Mobilfunkstation (19) über das Telekommunikationsendgerät (15) zu empfangen und die Entsperreinrichtung (10) zu aktivieren.

38. Mobilfunkkarte (1) nach einem der Ansprüche 27 bis 37, **dadurch gekennzeichnet, dass** die Entsperreinrichtung (10) eingerichtet ist, eine bestehende Zugangskennung (13) über das Telekommunikationsendgerät (15) dem Benutzer mitzuteilen.

39. Mobilfunkkarte (1) nach einem der Ansprüche 27 bis 37, **dadurch gekennzeichnet, dass** die Entsperreinrichtung (10) eingerichtet ist, dem Benutzer über das Telekommunikationsendgerät (15) zum Bereitstellen einer neuen Zugangskennung aufzufordern.

40. Mobilfunkkarte (1) nach einem der Ansprüche 27 bis 37, **dadurch gekennzeichnet, dass** die Entsperreinrichtung (10) eingerichtet ist, eine neue Zugangskennung zu generieren und die neue Zugangskennung über das Telekommunikationsendgerät (15) dem Benutzer mitzuteilen.

41. Mobilfunkkarte (1) nach Anspruch 39 oder 40, **dadurch gekennzeichnet, dass** die Entsperreinrichtung (10) eingerichtet ist, die von dem Benutzer bereitgestellte oder die von der Entsperreinrichtung (10) generierte Zugangskennung als Zugangskennung (13) der Mobilfunkkarte (1) zu aktivieren.

42. Mobilfunkkarte (1) nach einem der Ansprüche 27 bis 41, **dadurch gekennzeichnet, dass** die Entsperreinrichtung (10) eingerichtet ist, einen Fehlbedienungszähler der Mobilfunkkarte (1) zu initialisieren.

43. Mobilfunkkarte (1) nach einem der Ansprüche 27 bis 42, **dadurch gekennzeichnet, dass** die Steuereinrichtung (7) eingerichtet ist, falls die Mobilfunkkarte (1) gesperrt ist, über das Telekommunikationsendgerät (15) eine Entsperraufforderung des Benutzers zu empfangen, um das Entsperren der Mobilfunkkarte (1) aktiv einzuleiten.

44. Mobilfunkkarte (1) nach Anspruch 43, **dadurch gekennzeichnet, dass** die Steuereinrichtung (7) eingerichtet ist, die Mobilfunkkarte (1) unwiderruflich zu sperren, falls eine vorgegebene Anzahl von erfolglosen Versuchen, die Mobilfunkkarte zu entsperren, eingeleitet wurden.

45. Mobilfunkkarte (1) umfassend eine Steuereinrichtung (7) und einen Speicher (5), in welchem eine Zugangskennung (13) eines Benutzers hinterlegt ist, **dadurch gekennzeichnet, dass** die Mobilfunkkarte (1) eine Standortermittlungseinrichtung (8) und eine Entsperreinrichtung (10) umfasst, wobei
- die Standortermittlungseinrichtung (8) eingerichtet ist, einen aktuellen Standort der Mobilfunkkarte (1) in einem Mobilfunknetz über ein Telekommunikationsendgerät (15) zu ermitteln, in welches die Mobilfunkkarte (1) einsetzbar ist; und
- die Entsperreinrichtung (10) eingerichtet ist, die mittels einer Zugangskennung (13) eines Benutzers gesperrte Mobilfunkkarte (1) zu entsperren, falls der ermittelte aktuelle Standort und ein vorgegebener Entsperrstandort (14; 23) übereinstimmen; und
- eine Standortfestlegungseinrichtung (12) umfasst, die eingerichtet ist, den ermittelten aktuellen Standort als den späteren Entsperrstandort (14) in dem Speicher der Mobilfunkkarte (1) zu hinterlegen oder über das Telekommunikationsendgerät (15) an ein Mobilfunknetzwerk (19) zum externen Verbleib zu übertragen.

46. Mobilfunkkarte (1) nach Anspruch 45, **dadurch gekennzeichnet, dass** die Mobilfunkkarte (1) ein Standortfestsetlegungsmenü umfasst, über welches der Benutzer die Standortfestlegungseinrichtung (12) aktivieren kann.

47. Mobilfunkkarte (1) nach einem der Ansprüche 27 bis 46, **dadurch gekennzeichnet, dass** die Mobilfunkkarte (1) eingerichtet ist, Daten per Kurznachricht und/oder Telefongespräch und/oder sonstigem Datensignal von einem Mobilfunknetzwerk (19) zu erhalten und/ oder an das Mobilfunknetzwerk (19) über das Telekommunikationsendgerät (15) zu übertragen.

48. Mobilfunkkarte (1) nach einem der Ansprüche 27 bis 47, **dadurch gekennzeichnet, dass** die Mobilfunkkarte (1) eine SIM-Karte oder eine USIM-Karte und die Zugangskennung (13) eine PIN ist.

49. Mobilfunkkarte (1) nach einem der Ansprüche 27 bis 48, **dadurch gekennzeichnet, dass** die Mobilfunkkarte (1) eingerichtet ist, in ein Mobiltelefon oder ein sonstiges Mobilfunkkartenzugriffsgerät eingesetzt zu werden.

## Claims

1. A method for unlocking a mobile communication card (1) locked by means of an access identification (13) of a user, with the steps of:
- ascertaining (S5) a current location of a telecommunication terminal (15) in which the mobile communication card (1) is inserted, in a mobile communication network;
- comparing (S7) the current location to a stored unlocking location (14; 23); and
- unlocking (S8) if the current location coincides with the unlocking location (14; 23); in the step of unlocking the mobile communication card (1) is unlocked;
**characterized in that**
in the step of ascertaining (S5) the mobile communication card (1) is temporarily logged into the mobile communication network for the purpose of ascertaining the current location; and
the temporarily logged-in mobile communication card (1) is locked for regular telecommunication operation.

2. The method according to claim 1, **characterized in that** in the step of ascertaining (S5) a request is sent by the mobile communication card (1) in order to request location data.

3. The method according to claim 2, **characterized in that** in the step of ascertaining (S5) location data are sent to the mobile communication card (1).

4. The method according to any of the claims 2 or 3, **characterized in that** the location data contain the ascertained current location, and in the step of ascertaining (S5) the current location is gathered from the location data.

5. The method according to claim 2 or 3, **characterized in that** in the step of ascertaining (S5) the mobile communication card (1) ascertains the current location from the location data.

6. The method according to any of the claims 1 to 5, **characterized in that**, if the unlocking location (14; 23) is stored on the mobile communication card (1), in the step of comparing (S7) the unlocking location (14; 23) is compared to the ascertained current location by the mobile communication card (1).

7. The method according to any of the claims 1 to 5, **characterized in that**, if the unlocking location (23) is not stored on the mobile communication card (1), the unlocking location (23) is transmitted to the mobile communication card (1) and in the step of comparing (S7) is compared to the ascertained current location by the mobile communication card (1).

8. The method according to any of the claims 1 to 5, **characterized in that**, if the unlocking location (23) is stored separately from the mobile communication card (1) in a mobile communication network (19), in the step of comparing (S7) the unlocking location (23) is compared externally to the ascertained current location.

9. The method according to any of the claims 1 to 5, **characterized in that**, if the unlocking location (14) is stored on the mobile communication card (1), in the step of comparing (S7) the unlocking location (14) is transmitted to a mobile communication network (19) and is compared externally to the ascertained current location.

10. The method according to any of the claims 1 to 9, **characterized in that** the step of unlocking (S8) is effected by the mobile communication card (1).

11. The method according to claim 10, **characterized in that** in the step of unlocking (S8) an unlocking command is transmitted to the mobile communication card (1) from outside, and is implemented by the mobile communication card (1) such that the mobile communication card (1) is unlocked.

12. The method according to claim 11, **characterized in that** in the step of unlocking (S8) the unlocking command is received by an over-the-air interface (18) of the telecommunication terminal (15).

13. The method according to any of the claims 10 to 12, **characterized in that** in the step of unlocking (S8) an existing access identification (13) is communicated to the user via the telecommunication terminal (15).

14. The method according to any of the claims 10 to 12, **characterized in that** in the step of unlocking (S8) the user is requested via the telecommunication terminal (15) to provide a new access identification, and that the provided new access identification is activated as access identification (13).

15. The method according to any of the claims 10 to 12, **characterized in that** in the step of unlocking (S8) a new access identification is provided by the mobile communication card (1) or a mobile communication network (19) and communicated to the user via the telecommunication terminal (15), and that the provided new access identification is activated.

16. The method according to any of the claims 10 to 15, **characterized in that** in the step of unlocking (S8) an operation error counter of the mobile communication card (1) is initialized.

17. The method according to any of the claims 1 to 16, **characterized in that** the method is actively initiated by a user of the mobile communication card (1) via the telecommunication terminal (15).

18. The method according to claim 17, **characterized in that** the mobile communication card (1) is locked irrevocably if a predetermined number of unsuccessful attempts at initiating the unlocking procedure is reached.

19. A method for configuring an unlocking function of a mobile communication card (1), with the steps of:
- determining (S3) a location as unlocking location (14; 23) for the mobile communication card (1), wherein an unlocking location (14; 23) defines the location for the mobile communication card (1) where the mobile communication card (1) can be unlocked when it has been locked by means of an access identification (13) of the user,
- ascertaining (S2) a current location of a mobile telecommunication terminal (15) in which the mobile communication card (1) is inserted, in a mobile communication network; and **characterized in that**
in the step of determining (S3) an ascertained current location is determined as the unlocking location (14, 23) for the mobile communication card (1),
and wherein in the step of ascertaining (S2), the mobile communication card (1) is logged into the mobile communication network if it has not been logged in.

20. The method according to claim 19, **characterized in that** in the step of ascertaining (S2) a request is sent by the mobile communication card (1) in order to request location data.

21. The method according to claim 20, **characterized in that** in the step of ascertaining (S2) location data are sent to the mobile communication card (1).

22. The method according to claim 20 or 21, **characterized in that** the location data contain the ascertained current location.

23. The method according to claim 20 or 21, **characterized in that** in the step of ascertaining S2) the mobile communication card (1) ascertains the current location from the location data.

24. The method according to any of the claims 19 to 23, **characterized in that** in the step of determining (S3) the ascertained current location is stored as unlocking location (14) on the mobile communication card (1).

25. The method according to any of the claims 19 to 23, **characterized in that** in the step of determining (S3) the ascertained current location is stored as unlocking location (23) separately from the mobile communication card in a mobile communication network (19).

26. The method according to any of the claims 19 to 25, **characterized in that** the method is initiated by a user of the mobile communication card (1) via the telecommunication terminal (15).

27. A mobile communication card (1) comprising a control device (7) and a memory (5) in which an access identification (13) of a user is stored, further that the mobile communication card (1) comprises a location ascertaining device (8) and an unlocking device (10), wherein
- the location ascertaining device (8) is adapted to ascertain a current location of the mobile communication card (1) in a mobile communication network via a telecommunication terminal (15), in which the mobile communication card (1) can be inserted; and **characterized in that**
- the unlocking device (10) is adapted to unlock the mobile communication card (1) locked by means of an access identification (13) of the user, if an ascertained current location and a predetermined unlocking location (14; 23) coincide, wherein the mobile communication card (1) temporarily logs into the mobile communication network for the purpose of determining the current location, and wherein the temporarily logged-in mobile communication card (1) is locked for regular telecommunication operation.

28. The mobile communication card (1) according to claim 27, **characterized in that** the control device (7) is adapted to temporarily log the mobile communication card (1) into the mobile communication network only for the purpose of ascertaining the current location.

29. The mobile communication card (1) according to claim 27 or 28, **characterized in that** the control device (7) is adapted to lock the mobile communication card (1) for regular telecommunication operation during the temporary logging in.

30. The mobile communication card (1) according to any of the claims 27 to 29, **characterized in that** the location ascertaining device (8) is adapted to cause a sending of a request signal in order to request location data, and the control device (7) is adapted to send the request signal via the telecommunication terminal (15).

31. The mobile communication card (1) according to claim 30, **characterized in that** the control device (7) is adapted to receive location data via the telecommunication terminal (15), and the location ascertaining device (8) is adapted to either ascertain the current location on the basis of the received location data or, if the location data contain the current location, to gather the current location from the received location data.

32. The mobile communication card (1) according to any of the claims 27 to 31, **characterized in that** the predetermined unlocking location (14; 23) is stored in the memory (5) of the mobile communication card (1).

33. The mobile communication card (1) according to any of the claims 27 to 32, **characterized in that** the control device (7) is adapted to receive an externally present unlocking location (23) via a telecommunication terminal (15) in which the mobile communication card (1) can be inserted.

34. The mobile communication card (1) according to any of the claims 27 to 33, **characterized by** a comparing device (9) which is adapted to compare the ascertained current location to the predetermined unlocking location (14; 23).

35. The mobile communication card (1) according to any of the claims 27 to 31, **characterized in that** the control device (7) is adapted to transmit the ascertained current location to a mobile communication network (19) via the telecommunication terminal (15).

36. The mobile communication card (1) according to claim 35, **characterized in that** the control device (7) is adapted to receive a result of a comparison between the current location and an externally predetermined unlocking location (23) from the mobile communication network (19) via the telecommunication terminal (15).

37. The mobile communication card (1) according to claim 35, **characterized in that** the control device (7) is adapted to receive an unlocking command from the mobile communication station (19) via the telecommunication terminal (15) and to activate the unlocking device (10).

38. The mobile communication card (1) according to any of the claims 27 to 37, **characterized in that** the unlocking device (10) is adapted to communicate an existing access identification (13) to the user via the telecommunication terminal (15).

39. The mobile communication card (1) according to any of the claims 27 to 37, **characterized in that** the unlocking device (10) is adapted to request the user to provide a new access identification via the telecommunication terminal (15).

40. The mobile communication card (1) according to any of the claims 27 to 37, **characterized in that** the unlocking device (10) is adapted to generate a new access identification and to communicate the new access identification to the user via the telecommunication terminal (15).

41. The mobile communication card (1) according to claim 39 or 40, **characterized in that** the unlocking device (10) is adapted to activate the access identification provided by the user or generated by the unlocking device (10) as access identification (13) of the mobile communication card (1).

42. The mobile communication card (1) according to any of the claims 27 to 41, **characterized in that** the unlocking device (10) is adapted to initialize an operation error counter of the mobile communication card (1).

43. The mobile communication card (1) according to any of the claims 27 to 42, **characterized in that** the control device (7) is adapted, if the mobile communication card (1) is locked, to receive an unlocking request by the user via the telecommunication terminal (15), in order to actively initiate the unlocking of the mobile communication card (1).

44. The mobile communication card (1) according to claim 43, **characterized in that** the control device (7) is adapted to irrevocably lock the mobile communication card (1) if a predetermined number of unsuccessful attempts at unlocking the mobile communication card have been initiated.

45. A mobile communication card (1) comprising a control device (7) and a memory (5) in which an access identification (13) of a user is stored, **characterized in that** the mobile communication card (1) comprises a location ascertaining device (8) and an unlocking device (10), wherein
- the location ascertaining device (8) is adapted to ascertain a current location of the mobile communication card (1) in a mobile communication network via a telecommunication terminal (15) in which the mobile communication card (1) can be inserted; and
- the unlocking device (10) is adapted to unlock the mobile communication card (1) locked by means of an access identification (13) of a user, if the ascertained current location and a predetermined unlocking location (14; 23) coincide; and
- comprises a location determining device (12) adapted to store the ascertained current location as the later unlocking location (14) in the memory of the mobile communication card (1) or to transmit said location to a mobile communication network (19) for external storage via the telecommunication terminal (15).

46. The mobile communication card (1) according to claim 45, **characterized in that** the mobile communication card (1) comprises a location determination menu via which the user can activate the location determining device (12).

47. The mobile communication card (1) according to any of the claims 27 to 46, **characterized in that** the mobile communication card (1) is adapted to receive from a mobile communication network (19) and/or transmit to the mobile communication network (19), via the telecommunication terminal (15), data by short message and/or telephone call and/or other data signal.

48. The mobile communication card (1) according to any of the claims 27 to 47, **characterized in that** the mobile communication card (1) is a SIM card or a USIM card and the access identification (13) is a PIN.

49. The mobile communication card (1) according to any of the claims 27 to 48, **characterized in that** the mobile communication card (1) is adapted to be inserted in a mobile telephone or other mobile communication card accessing device.

## Revendications

1. Procédé de déblocage d'une carte de téléphonie mobile (1) bloquée au moyen d'un identifiant d'accès (13) d'un utilisateur, comprenant les étapes:
- détermination (S5) d'un emplacement actuel d'un terminal de télécommunication (15) dans lequel la carte de téléphonie mobile (1) est insérée, dans un réseau de téléphonie mobile;
- comparaison (S7) de l'emplacement actuel avec un emplacement de déblocage (14; 23) enregistré; et
- déblocage (S8) dans le cas où l'emplacement actuel coïncide avec l'emplacement de déblocage (14; 23);
lors de l'étape du déblocage, la carte de téléphonie mobile (1) est débloquée;
**caractérisé en ce que**
lors de l'étape de la détermination (S5), la carte de téléphonie mobile (1) est, aux fins de la détermination de l'emplacement actuel, temporairement consignée dans le réseau de téléphonie mobile, et
la carte de téléphonie mobile (1) temporairement consignée est bloquée pour un mode de télécommunication régulier.

2. Procédé selon la revendication 1, **caractérisé en ce que**, lors de l'étape de la détermination (S5), une demande est envoyée par la carte de téléphonie mobile (1) afin de demander des données d'emplacement.

3. Procédé selon la revendication 2, **caractérisé en ce que**, lors de l'étape de la détermination (S5), des données d'emplacement sont envoyées à la carte de téléphonie mobile (1).

4. Procédé selon une des revendications 2 ou 3, **caractérisé en ce que** les données d'emplacement incluent l'emplacement déterminé et **en ce que**, lors de l'étape de la détermination (S5), l'emplacement actuel est déduit des données d'emplacement.

5. Procédé selon la revendication 2 ou 3, **caractérisé en ce que**, lors de l'étape de la détermination (S5), la carte de téléphonie mobile (1) détermine à partir des données d'emplacement l'emplacement actuel.

6. Procédé selon une des revendications de 1 à 5, **caractérisé en ce que**, si l'emplacement de déblocage (14; 23) est enregistré sur la carte de téléphonie mobile (1), l'emplacement de déblocage (14; 23) est, lors de l'étape de la comparaison (S7), comparé par la carte de téléphonie mobile (1) avec l'emplacement actuel déterminé.

7. Procédé selon une des revendications de 1 à 5, **caractérisé en ce que**, si l'emplacement de déblocage (23) n'est pas enregistré sur la carte de téléphonie mobile (1), l'emplacement de déblocage (23) est transmis sur la carte de téléphonie mobile (1) et, lors de l'étape de la comparaison (S7), est comparé par la carte de téléphonie mobile (1) avec l'emplacement actuel déterminé.

8. Procédé selon une des revendications de 1 à 5, **caractérisé en ce que**, si l'emplacement de déblocage (23) est enregistré séparément par la carte de téléphonie mobile (1) dans un réseau de téléphonie mobile (19), l'emplacement de déblocage (23) est, lors de l'étape de la comparaison (S7), comparé par voie externe avec l'emplacement actuel déterminé.

9. Procédé selon une des revendications de 1 à 5, **caractérisé en ce que**, si l'emplacement de déblocage (14) est enregistré sur la carte de téléphonie mobile (1), l'emplacement de déblocage (14) est, lors de l'étape de la comparaison (S7), transmis à un réseau de téléphonie mobile (19) et comparé par voie externe avec l'emplacement actuel déterminé.

10. Procédé selon une des revendications de 1 à 9, **caractérisé en ce que** l'étape du déblocage (S8) est exécutée par la carte de téléphonie mobile (1).

11. Procédé selon la revendication 10, **caractérisé en ce que**, lors de l'étape du déblocage (S8), une instruction de déblocage de source externe est transmise à la carte de téléphonie mobile (1) et est mise de telle façon en pratique par la carte de téléphonie mobile (1) que la carte de téléphonie mobile (1) est débloquée.

12. Procédé selon la revendication 11, **caractérisé en ce que**, lors de l'étape du déblocage (S8), une instruction de déblocage est reçue part une interface radio (18) du terminal de télécommunication (15).

13. Procédé selon une des revendications de 10 à 12, **caractérisé en ce que**, lors de l'étape du déblocage (S8), un identifiant d'accès (13) existant est communiqué à l'utilisateur par l'intermédiaire du terminal de télécommunication (15).

14. Procédé selon une des revendications de 10 à 12, **caractérisé en ce que**, lors de l'étape du déblocage (S8), l'utilisateur est sommé par l'intermédiaire du terminal de télécommunication (15) de mettre à disposition un nouvel identifiant d'accès, et **en ce que** le nouvel identifiant d'accès mis à disposition est activé en tant qu'identifiant d'accès (13).

15. Procédé selon une des revendications de 10 à 12, **caractérisé en ce que**, lors de l'étape du déblocage (S8), un nouvel identifiant d'accès est mis à disposition par la carte de téléphonie mobile (1) ou par un réseau de téléphonie mobile (19) et est communiqué à l'utilisateur par l'intermédiaire du terminal de télécommunication (15), et **en ce que** le nouvel identifiant d'accès mis à disposition est activé.

16. Procédé selon une des revendications de 10 à 15, **caractérisé en ce que**, lors de l'étape du déblocage (S8), un compteur de fausses manoeuvres de la carte de téléphonie mobile (1) est initialisé.

17. Procédé selon une des revendications de 1 à 16, **caractérisé en ce que** le procédé est engagé activement par un utilisateur de la carte de téléphonie mobile (1) par l'intermédiaire du terminal de télécommunication (15).

18. Procédé selon la revendication 17, **caractérisé en ce que** la carte de téléphonie mobile (1) est irrévocablement bloquée si un nombre prescrit de tentatives infructueuses d'engagement du procédé de déblocage est atteint.

19. Procédé de configuration d'une fonctionnalité de déblocage d'une carte de téléphonie mobile (1), comprenant les étapes:
- établissement (S3) d'un emplacement en tant qu'emplacement de déblocage (14; 23) pour la carte de téléphonie mobile (1), un emplacement de déblocage (14; 23) définissant pour la carte de téléphonie mobile (1) l'emplacement à laquelle la carte de téléphonie mobile (1) se laisse débloquer quand elle est bloquée au moyen d'un identifiant d'accès (13) de l'utilisateur,
- détermination (S2) d'un emplacement actuel d'un terminal de télécommunication mobile (15) dans lequel la carte de téléphonie mobile (1) est insérée, dans un réseau de téléphonie mobile; et **caractérisé en ce que**,
lors de l'étape de l'établissement (S3), un emplacement actuel déterminé est établi en tant que l'emplacement de déblocage (14; 23) pour la carte de téléphonie mobile (1),
et cependant que, lors de l'étape de la détermination (S2), la carte de téléphonie mobile (1) est consignée dans le réseau de téléphonie mobile si elle n'est pas consignée.

20. Procédé selon la revendication 19, **caractérisé en ce que**, lors de l'étape de la détermination (S2), une sommation est envoyée par la carte de téléphonie mobile (1) afin de demander les données d'emplacement.

21. Procédé selon la revendication 20, **caractérisé en ce que**, lors de l'étape de la détermination (S2), des données d'emplacement sont envoyées à la carte de téléphonie mobile (1).

22. Procédé selon la revendication 20 ou 21, **caractérisé en ce que** les données d'emplacement incluent l'emplacement actuel déterminé.

23. Procédé selon la revendication 20 ou 21, **caractérisé en ce que**, lors de l'étape de la détermination (S2), la carte de téléphonie mobile (1) détermine à partir des données d'emplacement l'emplacement actuel.

24. Procédé selon une des revendications de 19 à 23, **caractérisé en ce que**, lors de l'étape de l'établissement (S3), l'emplacement actuel déterminé est enregistré en tant qu'emplacement de déblocage (14) sur la carte de téléphonie mobile (1).

25. Procédé selon une des revendications de 19 à 23, **caractérisé en ce que**, lors de l'étape de l'établissement (S3), l'emplacement actuel déterminé est enregistré en tant qu'emplacement de déblocage (23) séparément de la carte de téléphonie mobile dans un réseau de téléphonie mobile (19).

26. Procédé selon une des revendications de 19 à 25, **caractérisé en ce que** le procédé est engagé par un utilisateur de la carte de téléphonie mobile (1) par l'intermédiaire du terminal de télécommunication (15).

27. Carte de téléphonie mobile (1), comprenant un dispositif de commande (7) et une mémoire (5) dans laquelle un identifiant d'accès (13) d'un utilisateur est enregistré, la carte de téléphonie mobile (1) comprenant en outre un dispositif de détermination de l'emplacement (8) et un dispositif de déblocage (10), cependant que
- le dispositif de détermination de l'emplacement (8) est configuré pour déterminer un emplacement actuel de la carte de téléphonie mobile (1) dans un réseau de téléphonie mobile par l'intermédiaire d'un terminal de télécommunication (15) dans lequel la carte de téléphonie mobile (1) est insérable; et **caractérisée en ce que**
- le dispositif de déblocage (10) est configuré de façon à débloquer une carte de téléphonie mobile (1) bloquée au moyen d'un identifiant d'accès (13) de l'utilisateur si un emplacement actuel déterminé et un emplacement de déblocage (14; 23) prescrit coïncident entre eux;
cependant que la carte de téléphonie mobile (1), aux fins de la détermination de l'emplacement actuel, se consigne temporairement dans le réseau de téléphonie mobile, et
cependant que la carte de téléphonie mobile (1) temporairement consignée est bloquée pour un mode de télécommunication régulier.

28. Carte de téléphonie mobile (1) selon la revendication 27, **caractérisée en ce que** le dispositif de commande (7) est configuré pour ne consigner temporairement dans le réseau de téléphonie mobile la carte de téléphonie mobile (1) qu'aux fins de la détermination de l'emplacement actuel.

29. Carte de téléphonie mobile (1) selon la revendication 27 ou 28, **caractérisée en ce que** le dispositif de commande (7) est configuré pour bloquer durant la consigne temporaire la carte de téléphonie mobile (1) pour un mode de télécommunication régulier.

30. Carte de téléphonie mobile (1) selon une des revendications de 27 à 29, **caractérisée en ce que** le dispositif de détermination de l'emplacement (8) est configuré pour déclencher l'envoi d'un signal de demande afin de demander des données d'emplacement, et **en ce que** le dispositif de commande (7) est configuré pour envoyer par l'intermédiaire du terminal de télécommunication (15) le signal de demande.

31. Carte de téléphonie mobile (1) selon la revendication 30, **caractérisée en ce que** le dispositif de commande (7) est configuré pour recevoir par l'intermédiaire du terminal de télécommunication (15) des données d'emplacement, et **en ce que** le dispositif de détermination de l'emplacement (8) est configuré soit pour, au moyen des données d'emplacement reçues, déterminer l'emplacement actuel, soit pour, si les données d'emplacement incluent l'emplacement actuel, déduire des données d'emplacement reçues l'emplacement actuel.

32. Carte de téléphonie mobile (1) selon une des revendications de 27 à 31, **caractérisée en ce que** l'emplacement de déblocage (14; 23) prescrit est enregistré dans la mémoire (5) de la carte de téléphonie mobile (1).

33. Carte de téléphonie mobile (1) selon une des revendications de 27 à 32, **caractérisée en ce que** le dispositif de commande (7) est configuré pour recevoir, par l'intermédiaire d'un terminal de télécommunication (15) dans lequel la carte de téléphonie mobile (1) est insérable, un emplacement de déblocage (23) de source externe.

34. Carte de téléphonie mobile (1) selon une des revendications de 27 à 33, **caractérisée par** un dispositif de comparaison (9) configuré pour comparer l'emplacement actuel déterminé avec l'emplacement de déblocage (14; 23) prescrit.

35. Carte de téléphonie mobile (1) selon une des revendications de 27 à 31, **caractérisée en ce que** le dispositif de commande (7) est configuré pour transmettre à un réseau de téléphonie mobile (19), par l'intermédiaire du terminal de télécommunication (15), l'emplacement actuel déterminé.

36. Carte de téléphonie mobile (1) selon la revendication 35, **caractérisée en ce que** le dispositif de commande (7) est configuré pour recevoir de la part du réseau de téléphonie mobile (19), par l'intermédiaire du terminal de télécommunication (15), un résultat d'une comparaison entre l'emplacement actuel et un emplacement de déblocage (23) externement prescrit.

37. Carte de téléphonie mobile (1) selon la revendication 35, **caractérisée en ce que** le dispositif de commande (7) est configuré pour recevoir une instruction de déblocage de la part de la station de téléphonie mobile (19) par l'intermédiaire du terminal de télécommunication (15) et pour activer le dispositif de déblocage (10).

38. Carte de téléphonie mobile (1) selon une des revendications de 27 à 37, **caractérisée en ce que** le dispositif de déblocage (10) est configuré pour communiquer à l'utilisateur, par l'intermédiaire du terminal de télécommunication (15), un identifiant d'accès (13) existant.

39. Carte de téléphonie mobile (1) selon une des revendications de 27 à 37, **caractérisée en ce que** le dispositif de déblocage (10) est configuré pour sommer l'utilisateur, par l'intermédiaire du terminal de télécommunication (15), de mettre à disposition un nouvel identifiant d'accès.

40. Carte de téléphonie mobile (1) selon une des revendications de 27 à 37, **caractérisée en ce que** le dispositif de déblocage (10) est configuré pour générer un nouvel identifiant d'accès et pour communiquer à l'utilisateur, par l'intermédiaire du terminal de télécommunication (15), le nouvel identifiant d'accès.

41. Carte de téléphonie mobile (1) selon la revendication 39 ou 40, **caractérisée en ce que** le dispositif de déblocage (10) est configuré pour activer en tant qu'identifiant d'accès (13) de la carte de téléphonie mobile (1) l'identifiant d'accès mis à disposition par l'utilisateur ou celui qui fut généré par le dispositif de déblocage (10).

42. Carte de téléphonie mobile (1) selon une des revendications de 27 à 41, **caractérisée en ce que** le dispositif de déblocage (10) est configuré pour initialiser un compteur de fausses manoeuvres de la carte de téléphonie mobile (1).

43. Carte de téléphonie mobile (1) selon une des revendications de 27 à 42, **caractérisée en ce que** le dispositif de commande (7) est configuré pour, dans le cas où la carte de téléphonie mobile (1) est bloquée, recevoir par l'intermédiaire du terminal de télécommunication (15) une instruction de déblocage de l'utilisateur afin d'engager activement le déblocage de la carte de téléphonie mobile (1).

44. Carte de téléphonie mobile (1) selon la revendication 43, **caractérisée en ce que** le dispositif de commande (7) est configuré pour bloquer irrévocablement la carte de téléphonie mobile (1) si un nombre prescrit de tentatives infructueuses de déblocage de la carte de téléphonie mobile ont été engagées.

45. Carte de téléphonie mobile (1), comprenant un dispositif de commande (7) et une mémoire (5) dans laquelle un identifiant d'accès (13) d'un utilisateur est enregistré, **caractérisée en ce que** la carte de téléphonie mobile (1) comprend un dispositif de détermination de l'emplacement (8) et un dispositif de déblocage (10), cependant que
- le dispositif de détermination de l'emplacement (8) est configuré pour déterminer un emplacement actuel de la carte de téléphonie mobile (1) dans un réseau de téléphonie mobile par l'intermédiaire d'un terminal de télécommunication (15) dans lequel la carte de téléphonie mobile (1) est insérable; et
- le dispositif de déblocage (10) est configuré pour débloquer la carte de téléphonie mobile (1) bloquée au moyen d'un identifiant d'accès (13) de l'utilisateur si l'emplacement actuel déterminé et un emplacement de déblocage (14; 23) prescrit coïncident entre eux; et
- comprend un dispositif d'établissement (12) de l'emplacement qui est configuré pour enregistrer dans la mémoire de la carte de téléphonie mobile (1), en tant qu'emplacement de déblocage (14) ultérieur, l'emplacement actuel déterminé, ou pour transmettre ce dernier, par l'intermédiaire du terminal de télécommunication (15), à un réseau de téléphonie mobile (19) afin qu'il y demeure externement.

46. Carte de téléphonie mobile (1) selon la revendication 45, **caractérisée en ce que** la carte de téléphonie mobile (1) comprend un menu d'établissement de l'emplacement par le biais duquel l'utilisateur peut activer le dispositif d'établissement de l'emplacement (12).

47. Carte de téléphonie mobile (1) selon une des revendications de 27 à 46, **caractérisée en ce que** la carte de téléphonie mobile (1) est configurée pour recevoir de la part d'un réseau de téléphonie mobile (19) et/ou pour transmettre au réseau de téléphonie mobile (19) par l'intermédiaire du terminal de télécommunication (15) des données par message court et/ou entretien téléphonique et/ou autre signal de données.

48. Carte de téléphonie mobile (1) selon une des revendications de 27 à 47, **caractérisée en ce que** la carte de téléphonie mobile (1) est une carte SIM ou une carte USIM ou et que l'identifiant d'accès (13) est un PIN.

49. Carte de téléphonie mobile (1) selon une des revendications de 27 à 48, **caractérisée en ce que** la carte de téléphonie mobile (1) est configurée pour être insérée dans un téléphone mobile ou dans un autre appareil offrant accès à une carte de téléphonie mobile.
